# DEMANDE DE BREVET EUROPEEN

(11) **EP 2 923 604 A1**
(43) Date de publication de la demande: **30.09.2015**
(21) Numéro de dépôt: 15160226.5
(22) Date de dépôt: 23.03.2015
(51) Int. Cl.: A47B 47/00, A47B 47/04, F16B 12/24

(54) **Meuble autoportant**

(30) Priorité: 26.03.2014 FR 1452593
(71) Demandeur: Rebourg, Philippe, 1201 Geneve (CH); Hammacher, Patrick, 74520 Valleiry (FR)
(72) Inventeur: Rebourg, Philippe, 1201 Genève (CH)
(74) Mandataire: Bugnion Genève

(57) **Abrégé**

L'invention concerne meuble autoportant constitué d'au moins un étage sans l'aide d'un outil quelconque, comprenant au moins deux traverses ( 1,100 à 104) et trois montants dont un au moins (516 à 519) est perpendiculaire aux deux autres (5, 500 à 515). Les deux traverses et les trois montants ont une épaisseur E d'au moins 16 mm et les deux traverses présentent dans le sens de la longueur d'une extrémité à l'autre au moins trois séries de trous (2, 3, 4) traversant identiques. ILespacement entre les axes de deux trous de chaque série est de D mm et deux séries (2, 3) sont situées respectivement à au moins une distance DB=E/2 mm de quatre extrémités longitudinales et transversales desdites traverses (1, 100 à104. Les montants (5, 500 à 519) sont munis sur leurs deux chants, opposés dans le sens de la hauteur, d'au moins deux ergots métalliques les espacements entre les ergots étant égal aux espacements entre les dites séries de trous (2,3,4) des traverses (1,100à 104). La hauteur visible des ergots cylindriques est au maximum égale à E/2 mm et leur diamètre correspond au diamètre desdits trous.

## Description

### DOMAINE TECHNIQUE DE L'INVENTION

L'invention concerne un meuble autoportant constitué d'au moins un étage monté sans l'aide d'un outil quelconque, comprenant au moins deux traverses, et trois montants dont au moins un est perpendiculaire aux deux autres montants, les traverses présentant dans le sens de la longueur d'une extrémité à l'autre deux séries de trous traversants identiques, l'espacement entre les axes de deux trous de chaque série étant de D mm, lesdits montants étant munis sur leurs deux chants, opposés dans le sens de la hauteur, d'au moins deux ergots dont l' espacement est égal à l'espacement entre lesdites séries de trous des traverses. L'invention concerne aussi un kit de montage pour un tel meuble.

### ETAT DE LA TECHNIQUE ANTERIEURE

Depuis de nombreuses années on trouve dans de magasins spécialisés des kits pour monter des meubles de rangement autoportants ou destinés à être suspendus ou fixés sur une paroi. Quelque soit le meuble à monter avec ou sans portes, quelques outils sont nécessaires et des instructions de montage. Souvent on doit monter les traverses supérieure et inférieure à deux montants par des ergots dont sont munis les chants des traverses collaborant avec de trous ou autres dispositifs situés sur les montants. On obtient un rectangle couché sur le plancher ou une surface plane. On fixe ensuite le dos pour rigidifier l'ensemble. On met l'assemblage en position verticale on introduit de taquets dans de trous prévus dans les deux montants et on y place les étagères. L'éventuelle fixation à une paroi se fait avant ou après avoir mis en place les étagères. Ces meubles sont rarement modulaires, c'est- à-dire qu'il est rarement possible de pouvoir les prolonger en hauteur ou largeur ou à angle droit.

Le FR 2 291 721 apporte une solution en proposant un meuble tel que défini dans paragraphe [0001].

### EXPOSE DE L'INVENTION

L'invention a pour but de proposer un tel meuble et un kit de montage apportant des améliorations structurelles et fonctionnelles.

Le kit de base selon l'invention est **caractérisé par le fait que** traverses comprennent au moins une troisième série de trous située entre les deux autres séries de trous, que les entre les séries de trous sont des multiples entiers de D, que les traverses et les montants ont une épaisseur E d'au moins 16 mm, que les deux séries de trous les plus éloignées l'une de l'autre sont situées respectivement à au moins une distance DB=E/2 mm de deux extrémités longitudinales desdites traverses et que le premier et dernier trou de chaque série de trous sont situés aussi à au moins une distance DB=E/2 mm des extrémités transversales desdites traverses, que lesdits sont métalliques de forme cylindrique dont la hauteur visible est au maximum égale à E/2 mm et leur diamètre correspond au diamètre desdits trous.

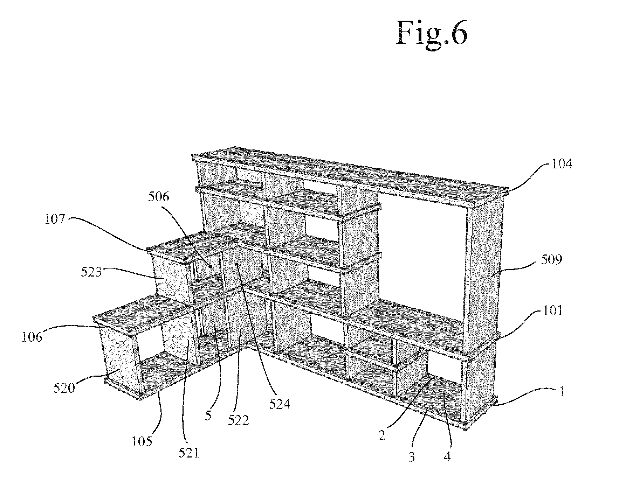

La troisième série de trous permet, d'une part, de compartimenter à volonté l'espace de chaque étage du meuble et créer des espaces cachés, et d'autre part il facilite la formation de structures complexes, par exemple en reliant structurellement deux meubles à angle droit comme sera indiqué dans la description en relation avec la figure 6.L'espacement proposé entre les trois séries de trous permet de décaler la position des montants latéraux lors d'un construction à angle droit pour obtenir un assemblage rigide. L'épaisseur minimum des traverses et des montants assure la solidité du meuble en prévision de l'évolution du meuble en hauteur et aussi en largeur en fonction des besoins de l'utilisateur. La distance minimum entre les trous et les bords des traverses assure le côté esthétique du meuble car les surfaces des montants et les chants des traverses après assemblage forment un plan continu et assure que les chants des montants seront en appui sur les traverses sur la totalité de leurs surfaces. Les dimensions et la nature des ergots assurent la solidité de l'assemblage.

Pour un meuble à plusieurs étages il est préférable que la largeur minimum d'une traverse soit de 300 mm. Cette largeur minimum assure que le meuble aura une assise stable et ne sera pas nécessaire de l'ancrer sur une paroi.

Selon une autre exécution la largeur des montants est inférieure à celle des traverses de E mm.

L'avantage de cette caractéristique est que le meuble lorsqu'il est contre une paroi un espace existe entre les montants et la paroi permettant de faire passer de câbles d'alimentation électrique ou de réseau informatique pour des appareils qui se trouvent sur un ou plusieurs étages du meuble.

Selon une exécution les traverses et les montants sont soit en bois massif, soit en Plexiglas®, soit en Corian®, soit en pierre, soit en panneaux de fibres de bois à densité moyenne communément appelé MDF soit en panneaux à particules de bois collées et stratifiés ou mélaminés.

L'avantage meuble est lié à sa conception. Il est constitué par des étages qui se montent verticalement au fur et à mesure comme un bâtiment construit, par exemple, par de parpaings. On prépare la base on monte les murs on pose sur les murs le plafond qui constitue le plancher de l'étage suivant et ainsi de suite. Les efforts sont essentiellement verticaux car les traverses intermédiaires, entre le plancher et le la traverse supérieure du meuble, ne reposent pas sur de taquets mais sur de montants verticaux. Tous les chants horizontaux des montants sont en contact avec la traverse supérieure et la traverse inférieure. La base du meuble est la traverse inférieure qui supporte le poids du meuble et de son contenu et elle assure une excellente stabilité, contrairement à la majorité de meubles similaires pour lesquels le contact avec le sol est assuré par les chants inférieurs des montants ou le plat de la traverse inférieure. Lorsque poids supporté par les taquets est important les fait plier ou les trous dans lesquels se trouvent les taquets se déforment.

L'invention sera décrite plus en détail à l'aide du dessin annexé.

### BREVE DESCRIPTION DES FIGURES

La figure 1 représente une traverse en plan ;
La figure 2 représente un montant en plan ;
La figure 3 représente un montant en perspective ;
La figure 4 représente un ergot en perspective ;
La figure 5 représente en perspective un meuble de rangement monté en utilisant un ou plusieurs kits selon l'invention,
La figure 6 est vue en perspective d'un meuble de rangement ayant une structure en L monté en utilisant un ou plusieurs kits selon l'invention.

### DESCRIPTION DÉTAILLÉE DE MODES DE REALISATION

L'inventeur a réalisé plusieurs kits selon l'invention et monter plusieurs meubles. Il a choisi du bois massif pour réaliser ses kits et meubles. Sur le marché, tout au moins européen, les panneaux disponibles en bois massif ont de dimensions normalisées. Ainsi, on trouve de panneaux d'une longueur de 4 m, d'une largeur de 1220 mm tandis que l'épaisseur est de 16, 19, 26, 32, 42, 52 mm. Pour un meuble autoportant, surtout à plusieurs étages, il fallait choisir une épaisseur E suffisante pour les traverses et les montants. Parmi la gamme disponible l'inventeur a choisit de planches dont l'épaisseur E=32 mm mais une épaisseur supérieure ou égale à 16 mm pour de meubles pas très hauts serait suffisante. Pour diminuer les déchets de ces planches normalisées au minimum, il a choisi aussi les dimensions des traverses et montants dans la gamme qui sera indiquée ci-dessous qui est toujours un multiple de 32 mm. Bien entendu, cette manière de dimensionner les traverses et les montants n'est pas obligatoire pour la mise en oeuvre de l'invention mais elle facilite la fabrication et le stockage. Il est aussi souhaitable que la largeur d'une traverse surtout pour un meuble à plusieurs étages soit au moins de 300mm.

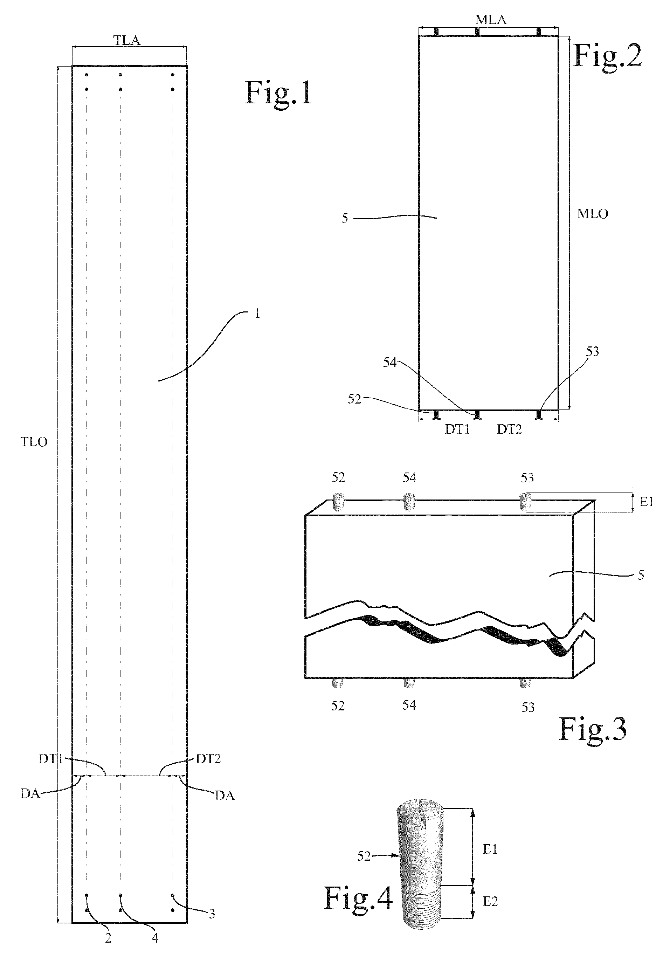

A la figure 1, nous avons en plan une traverse 1 d'une largeur LA d'une longueur TLO. Toutes les traverses d'un kit ont la même largeur TLA. En revanche, plusieurs longueurs TLO sont disponibles. A titre d'exemple, l'inventeur propose TLA= 384 mm et pour TLO propose quatre longueurs : 2240 mm, 1344 mm, 896 mm et 448 mm. A une distance minimum de DA=E/2 des arrêtes longitudinales et transversales de la traverse 1 deux séries de trous 2, 3 traversant l'épaisseur de la traverse sont percés. Ces trous ont un diamètre de 5 mm et la distance D entre les axes de deux trous de chaque série est égale 32 mm. Ce nombre de 32 mm correspond à une distance normalisée entre les trous que l'on trouve sur les montants des étagères habituelles permettant de disposer les taquets en fonction des objets que l'on souhaite y ranger. Une troisième série de trous 4 se trouve entre les deux séries 2 et 3. Cette troisième série voire d'autres séries de trous sont optionnelles. Elles permettent de créer de compartiments sur un étage du meuble. Dans le cas précis réalisé par l'inventeur, les séries 2 et 3 se trouvent à 32 mm de deux arrêtes longitudinales de la traverse 1 et la distance DT1 entre le séries de trous 2 et 4 est égale à 128 mm et la distance DT2 entre les séries de trous 4 et 3 est égale à 192 mm. Il est possible de prévoir plusieurs séries de trous, notamment si l'on choisit de traverses d'une largeur beaucoup plus grande.

A la figure 2, nous avons représenté un montant 5 d'une longueur MLO et une largeur MLA. La largeur MLA peut être égale à la largeur TLA des traverses 1. Néanmoins, pour une question esthétique et aussi fonctionnelle la largeur MLA =TLA-E. Dans le cas précis TLA = 352 mm. Les longueurs TLO choisies par l'inventeur sont : 864 mm, 416 mm, 304 mm et 192 mm.

Sur les deux chants du montant 5 qui seront en contact avec de traverses du meuble, deux ergots 52, 53, identiques sont disposés. Si la largeur MLA =TLA les deux ergots extrêmes 52 et 53 se trouvent à une distance égale à DA et égale à DA/2 si MLA =TLA-E. Un troisième ergot 54 peut être prévu. Les distances entre l'ergot intermédiaire 54 et les ergots 52 et 53 sont respectivement égales à DT1 et DT2 qui sont des multiples entiers de E

Si les traverses sont munies de plusieurs séries de trous, le nombre des ergots 52, 53, 54 pourraient correspondre à ce nombre de séries de trous Mais pour les dimensions choisies deux ergots par chant suffisent

A la figure 3, on voit une vue agrandie d'un montant 5 en perspective avec deux ergots 52, 53.

A la figure 4, un ergot 52 est représenté. Il est cylindrique d'un diamètre D. Sa partie inférieure E2 est filetée tandis que sa partie supérieure E1 est lisse. Et munie d'une fente pour faciliter son vissage sur les chants des montants. La longueur maximale de E1 est égale à E/2. Dans le cas présent est égale à 10 mm, E2=6 mm et le diamètre est égale à 5 mm comme le diamètre D des séries de trous 2, 3, 4. Le matériau utilisé et du métal et plus précisément de l'acier zingué.

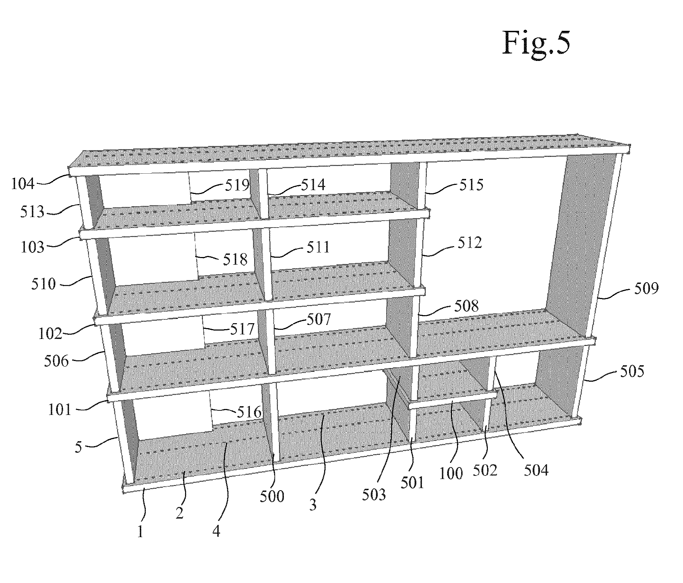

A la figure 5 nous avons représenté un meuble monté par un ou plusieurs kits selon l'invention. Il comprend plusieurs étages et compartiments. Nous avons choisi de traverses à trois séries de trous 2, 3, 4 mais dans le cas présent deux séries 2, 3 auraient suffi pour le montage représenté.

On pose la première traverse 1 à plat. On introduit les ergots 52 et 53 des montants 5, 500, 501, 502 et 505 dans les séries des trous 2 et 3 de la traverse 1. On met en place le montant 516 perpendiculaire aux montants précités en introduisant les ergots 52, 53 dans la série de trous 2. On pose sur les montants 501 et 502 la traverse 100 en introduisant les ergots des chants supérieurs des montants 501 et 502 dans les trous correspondants de la traverse 100. On introduit dans les trous de la traverse 100 les ergots de deux montants 503 et 504. On pose la traverse 101 sur les montants 5, 500, 503, 504, 505 et 516 en faisant rentrer les ergots des montants précités dans les trous de la traverse 101. Ensuite, on met en place comme précédemment les montants 506, 507, 508et 517 sur la traverse 101.On pose comme précédemment sur les montants 506, 507, 508et 517 la traverse 102. On agit de la même manière avec les montants 510, 511,512 et 518 et on pose la traverse 103 sur ces montants. Enfin, on pose les montants 513, 514, 515et 519 sur la traverse 103 et le montant 509 sur la traverse 101 et on pose la dernière traverse 104 sur les montants 513, 514, 515, 509 et 519. De montants et traverses de différentes longueurs ont été utilisés en fonction de la configuration souhaitée. Les montants 516 à 519 perpendiculaires aux autres montants peuvent être placés à n'importe quelle autre position que celle représentée sur la figure 5 sans nuire à la rigidité du meuble. Il est également possible d'utiliser, en plus de montants 516 à 519 plusieurs montants par étage en fonction du souhait de l'utilisateur, par exemple pour fermer complètement le dos d'un compartiment ou étage ou encore mettre un ou plusieurs montants perpendiculaires aux montants 5, 500, 501 à 515 pour cacher une partie d'un compartiment à la vue extérieure en plaçant un tel montant dans les trous de la série des trous 3 ou 4 pour autant que la série de trous 4 existe comme sur la figure 5. La seule contrainte est qu'il faut par étage au moins un montant perpendiculaire aux autres montants.

Dans l'exemple représenté les traverses sont plus larges que les montants ce qui permet de créer un rebord esthétique mais aussi fonctionnel. En effet, si le meuble est posé contre une paroi, l'espace entre les chants verticaux arrière des montants latéraux et la paroi permet de faire passer facilement les câbles d'alimentation et autres pour des appareils multimédia, dispositifs d'éclairage etc. Il est également possible, pour de raisons esthétiques ou fonctionnelles, que certaines traverses et/ou montants sont d'un autre matériau, par exemple, du Plexiglas®, de Corian®, de la pierre, de panneaux en fibres de bois à densité moyenne communément appelé MDF, de panneaux en particules de bois collées et stratifiés ou mélaminés. En effet, si par exemple on souhaite que les objets dans un compartiment du meuble soient éclairés par la lumière ambiante, utiliser du Plexiglas® permet d'obtenir ce but.

Le meuble représenté à la figure 5 n'est qu'un exemple parmi plusieurs possibilités.

Si l'utilisateur souhaite rajouter un étage total ou partiel au meuble représenté, il suffit d'acheter un kit et de continuer la construction ou la modifier.

A la figure 6 nous avons un meuble dont une première partie est essentiellement la même que le meuble de la figure 5, auquel une seconde partie a été ajoutée formant un angle droit, les deux parties n'étant pas simplement juxtaposées mais liées structurellement. Nous ne décrirons pas le montage de ce meuble en entier mais uniquement les parties qui changent par rapport au meuble de la figure 5.

La partie additionnelle comprend trois traverses supplémentaires 105, 106, 107 et cinq montants supplémentaires 520, 521, 522, 523 et 524 Dans le meuble de la figure 5 les ergots 52, 53 des montants 5 et 506 étaient introduits respectivement dans les troues des séries 2, et 3. Dans le meuble de la figure 6 les ergots 53 et des montants 5 et 506 ont été introduits respectivement dans les trous de la séries de trous 4 des traverses 1, 101 et 102. Les ergots 52 de ces mêmes montants 5, 506 sont introduits dans les trous de la série de trous 2 des traverses 105, 106 et 107 de la partie additionnelle. Les ergots 52 des montants 522 et 524 ont été introduits dans les trous de la série de trous 4 des traverses 1, 101 et 102. Les ergots 53 de ces mêmes montants 522 et 524 sont introduits dans les trous des séries de trous 3 des traverses 105,106 et 107. Le montage de ces traverses 5, 506, 522 et 523 sur de traverses appartenant aux deux parties du meuble assurent leur assemblage structurel.

Les deux meubles montrent deux configurations possibles parmi plusieurs. On peut monter d'autres éléments pour former une structure en U ou en S etc.

## Revendications

1. Meuble autoportant constitué d'au moins un étage monté sans l'aide d'un outil quelconque, comprenant au moins deux traverses (1, 100 - 107), et trois montants (5, 500 - 524) dont au moins un (516 - 519) est perpendiculaire aux deux autres montants (5, 500 -515), les traverses (1,100- 107) présentant dans le sens de la longueur d'une extrémité à l'autre deux séries de trous (2, 3) traversants identiques, l'espacement entre les axes de deux trous de chaque série étant de D mm, lesdits montants (5, 500 - 524) étant munis sur leurs deux chants, opposés dans le sens de la hauteur, d'au moins deux ergots (52, 53) dont l' espacement est égal à l'espacement entre lesdites séries de trous (2, 3) des traverses **caractérisé par le fait que** les traverses comprennent au moins une troisième série de trous (4) située entre les deux autres séries de trous (2, 3), que les espacements (DT1, DT2) entre les séries de trous (2, 3, 4) sont des multiples entiers de D, que les traverses et les montants ont une épaisseur E d'au moins 16 mm, que les deux séries de trous (2, 3) les plus éloignées l'une de l'autre sont situées respectivement à au moins une distance DB=E/2 mm de deux extrémités longitudinales desdites traverses et que le premier et dernier trou de chaque série de trous sont situés aussi à au moins une distance DB=E/2 mm des extrémités transversales desdites traverses, que lesdits ergots (52,53) sont métalliques de forme cylindrique dont la hauteur visible (E1) est au maximum égale à E/2 mm et leur diamètre correspond au diamètre desdits trous.

2. Meuble selon la revendication 1, **caractérisé par le fait que** la largeur minimum d'une traverse est de 300 mm.

3. Meuble selon l'une des revendications 1 ou 2, **caractérisé par le fait qu'il** comprend de traverses de différentes longueurs et de montants de différentes hauteurs.

4. Meuble selon l'une des revendications 1 à 3, **caractérisé par le fait que** la largeur des montants est inférieure à celle des traverses de E mm.

5. Meuble selon l'une des revendications 1 à 4, **caractérisé par le fait que** les montants sont munis d'un troisième ergot (54) les espacements entre les trois ergots (52,53,54) correspondent aux espacements entre les trois séries de trous (2.3.4).

6. Meuble selon l'une des revendications 1 à 5, **caractérisé par le fait que** pour chaque étage supplémentaire le meuble comprend au moins : une traverse et trois montants.

7. Meuble selon l'une des revendications 1 à 6, **caractérisé par le fait que** les traverses et les montants sont soit en bois massif, soit en Plexiglas®, soit en Corian®, soit en pierre, soit en panneaux de fibres de bois à densité moyenne communément appelé MDF soit en panneaux à particules de bois collées et stratifiés ou mélaminés.

8. Meuble selon l'une des revendications 1 à 7, **caractérisé par le fait que** les traverses et les montants sont en bois massif, que l'épaisseur E= 32 mm, la largeur des traverses est de 384 mm, que DB = 32 mm, que la largeur des montants est de 352 mm et que D=32 mm, qu'en fonction de la configuration du meuble à monter les longueurs disponibles des traverses sont les multiples entiers suivants de E: 448 mm, 896 mm, 1344 mm, 2240 mm et la longueur des traverses sont les multiples entiers suivants de E : 192 mm, 304 mm, 416 mm, 864 mm et que les ergots sont de vis de 5 mm de diamètre dont la partie inférieure est filetée sur une longueur de 6 mm et la hauteur visible est de 10 mm et que la distance entre la troisième série de trous (4) est les deux autres (2, 3) est respectivement de 128 mm et 192 mm.

9. Meuble selon l'une des revendications 1 à 8, **caractérisé par le fait qu'**il comprend de traverses et montants faits de matériaux différents choisis parmi : bois massif, Plexiglas®, Corian®, pierre, panneaux de fibres de bois à densité moyenne communément appelé MDF, panneaux à particules de bois collées et stratifiés ou mélaminés et dont l'épaisseur E n'est pas obligatoirement la même.

10. Kit de montage pour meuble autoportant selon l'une des revendications précédentes **caractérisé par le fait qu'**il comprend au moins deux traverses et trois montants tels que définis aux revendications précédentes.
